# EUROPEAN PATENT APPLICATION

(11) **EP 4 255 060 A1**
(43) Date of publication of application: **04.10.2023**
(21) Application number: 22164800.9
(22) Date of filing: 28.03.2022
(51) Int. Cl.: H04W 68/02, H04W 72/04, H04W 72/14, H04W 76/27, H04W 76/28

(54) **PAGING FOR MOBILE-TERMINATED (MT) SMALL DATA TRANSMISSION (SDT)**

(71) Applicant: Panasonic Intellectual Property Corporation of America, Torrance, CA 90504 (US)
(72) Inventor: TEO, Tiong Hou, 63225 Langen (DE); SUZUKI, Hidetoshi, Osaka, 571-8501 (JP); LATHEEF, Fasil, 63225 Langen (DE); ISHIKAWA, Akira, Osaka, 540-6207 (JP)
(74) Representative: Grünecker Patent- und Rechtsanwälte PartG mbB

(57) **Abstract**

The disclosure relates to a user equipment (UE), a network node, and respective methods for a UE and a network node. The UE comprises a transceiver and circuitry. The circuitry in operation receives a paging message, while being in an inactive state. In response to the paging message, the circuitry determines to remain in the inactive state for reception of small data. While remaining in the inactive state, the circuitry transmits a response to the paging message to a network node within a transmission opportunity associated with pre-configured resources.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE and NR, further improvements and options may facilitating efficient operation of the communication system as well as particular devices pertaining to the system.

### SUMMARY

One non-limiting and exemplary embodiment facilitates efficient handling of mobile-terminated small data transmission in an inactive state.

In an embodiment, the techniques disclosed here feature an apparatus (e.g. a user equipment, UE). The apparatus comprises a transceiver and circuitry. The circuitry, in operation, receives a paging message, while being in an inactive state. In response to the paging message, the circuitry determines to remain in the inactive state for reception of small data. While remaining in the inactive state, the circuitry transmits a response to the paging message to a network node within a transmission opportunity associated with pre-configured resources.

It should be noted that general or specific embodiments may be implemented as a system, a method, an integrated circuit, a computer program, a storage medium, or any selective combination thereof. For instance, an integrated circuit can control a process of a UE or network node.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: is a schematic drawing that shows a functional split between NG-RAN and 5GC;
- **Fig. 3**: is a sequence diagram for RRC connection setup/reconfiguration procedures;
- **Fig. 4**: is a schematic drawing showing usage scenarios of Enhanced mobile broadband (eMBB), Massive Machine Type Communications (mMTC) and Ultra Reliable and Low Latency Communications (URLLC);
- **Fig. 5**: is a block diagram showing an exemplary 5G system architecture for a non-roaming;
- **Fig. 6 and 7**: illustrate the contention-based and contention-free RACH procedure;
- **Fig. 8**: illustrates the possible RRC state changes;
- **Fig. 9**: illustrates a message exchange for the RRC Resume procedure;
- **Fig. 10 and 11**: illustrate a message exchange for the RRC Release procedure;
- **Fig. 12**: illustrates a message exchange of the prior art for uplink data transmission, including a state change of the UE from Inactive to Connected state;
- **Fig. 13 and 14**: illustrate an exemplary four-step RACH respectively two-step RACH usable for small-data uplink transmissions for an RRC_INACTIVE UE;
- **Fig. 15**: illustrates an exemplary paging procedure for downlink small data transmissions;
- **Fig. 16**: is a block diagram illustrating an exemplary functional structure of a network node and a user equipment;
- **Fig. 17**: is a block diagram illustrating an exemplary functional structure of the circuitry handling small data that may be included in the exemplary user equipment of Fig. 16;
- **Fig. 18**: is a block diagram illustrating an exemplary functional structure of the SDT handling circuitry that may be included in the exemplary scheduling device equipment of Fig. 16;
- **Fig. 19**: is a flow chart illustrating exemplary steps performed by a user equipment according to a first exemplary embodiment;
- **Fig. 20**: is a flow chart illustrating exemplary steps performed by a network node according to a first exemplary embodiment;
- **Fig. 21**: is a flow chart illustrating exemplary steps performed by a user equipment according to a second exemplary embodiment;
- **Fig. 22**: is a flow chart illustrating exemplary steps performed by a network node according to a second exemplary embodiment;
- **Fig. 23**: illustrates a exemplar implementation of receiving a paging message including an indication for SDT.

### DETAILED DESCRIPTION

### 5G NR system architecture and protocol stacks

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

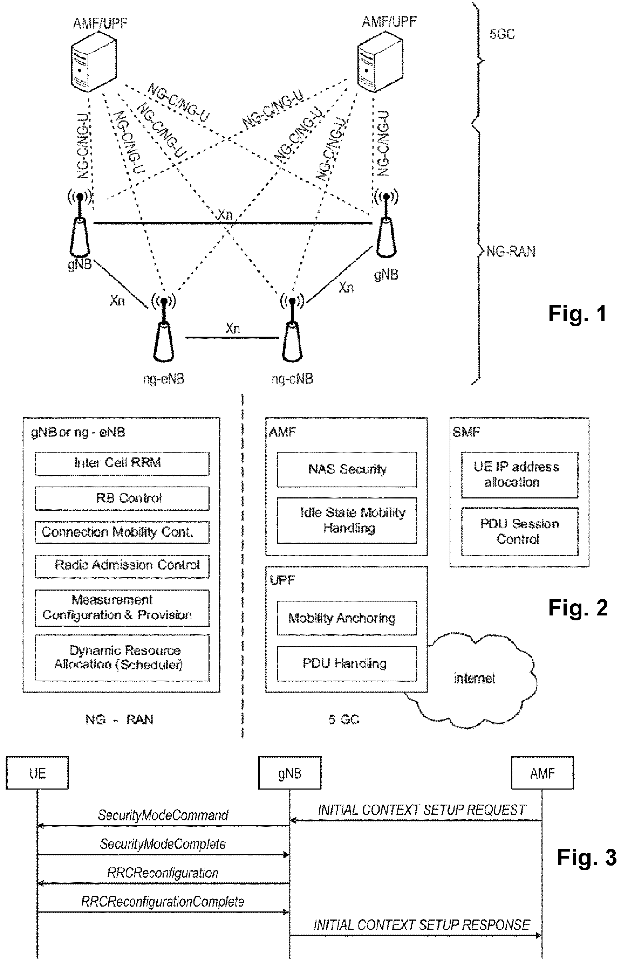

Among other things, the overall system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability (1-10⁻⁵ within 1ms). Finally, mMTC may preferably require high connection density (1,000,000 devices/km² in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60 kHz... are being considered at the moment. The symbol duration Tᵤ and the subcarrier spacing Δf are directly related through the formula Δf = 1 / Tᵤ. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0). For instance, downlink and uplink transmissions are organized into frames with 10ms duration, each frame consisting of ten subframes of respectively 1ms duration. In 5g NR implementations the number of consecutive OFDM symbols per subframe depends on the subcarrier-spacing configuration. For example, for a 15-kHz subcarrier spacing, a subframe has 14 OFDM symbols (similar to an LTE-conformant implementation, assuming a normal cyclic prefix). On the other hand, for a 30-kHz subcarrier spacing, a subframe has two slots, each slot comprising 14 OFDM symbols.

Comparing to LTE numerology (subcarrier spacing and symbol length), NR supports multiple different types of subcarrier spacing, labeled by a parameter *µ* (in LTE there is only a 15 kHz subcarrier spacing, corresponding to *µ* = 0 in NR). The types NR numerology is summarized in 3GPP TS 38.211, v 15.7.0.

### 5G NR functional split between NG-RAN and 5GC

**Fig. 2** illustrates functional split between NG-RAN and 5GC. NG-RAN logical node is a gNB or ng-eNB. The 5GC has logical nodes AMF, UPF and SMF.

In particular, the gNB and ng-eNB host the following main functions:
- Functions for Radio Resource Management such as Radio Bearer Control, Radio Admission Control, Connection Mobility Control, Dynamic allocation of resources to UEs in both uplink and downlink (scheduling);
- IP header compression, encryption and integrity protection of data;
- Selection of an AMF at UE attachment when no routing to an AMF can be determined from the information provided by the UE;
- Routing of User Plane data towards UPF(s);
- Routing of Control Plane information towards AMF;
- Connection setup and release;
- Scheduling and transmission of paging messages;
- Scheduling and transmission of system broadcast information (originated from theAMF or OAM);
- Measurement and measurement reporting configuration for mobility and scheduling;
- Transport level packet marking in the uplink;
- Session Management;
- Support of Network Slicing;
- QoS Flow management and mapping to data radio bearers;
- Support of UEs in RRC_INACTIVE state;
- Distribution function for NAS messages;
- Radio access network sharing;
- Dual Connectivity;
- Tight interworking between NR and E-UTRA.

The Access and Mobility Management Function (AMF) hosts the following main functions:
- Non-Access Stratum, NAS, signalling termination;
- NAS signalling security;
- Access Stratum, AS, Security control;
- Inter Core Network, CN, node signalling for mobility between 3GPP access networks;
- Idle mode UE Reachability (including control and execution of paging retransmission);
- Registration Area management;
- Support of intra-system and inter-system mobility;
- Access Authentication;
- Access Authorization including check of roaming rights;
- Mobility management control (subscription and policies);
- Support of Network Slicing;
- Session Management Function, SMF, selection.

Furthermore, the User Plane Function, UPF, hosts the following main functions:
- Anchor point for Intra-/Inter-RAT mobility (when applicable);
- External PDU session point of interconnect to Data Network;
- Packet routing & forwarding;
- Packet inspection and User plane part of Policy rule enforcement;
- Traffic usage reporting;
- Uplink classifier to support routing traffic flows to a data network;
- Branching point to support multi-homed PDU session;
- QoS handling for user plane, e.g. packet filtering, gating, UL/DL rate enforcement;
- Uplink Traffic verification (SDF to QoS flow mapping);
- Downlink packet buffering and downlink data notification triggering.

Finally, the Session Management function, SMF, hosts the following main functions:
- Session Management;
- UE IP address allocation and management;
- Selection and control of UP function;
- Configures traffic steering at User Plane Function, UPF, to route traffic to proper destination;
- Control part of policy enforcement and QoS;
- Downlink Data Notification.

### RRC connection setup and reconfiguration procedures

**Fig. 3** illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for exampleAMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation *configuration.*

### Usage Scenarios of IMT for 2020 and beyond

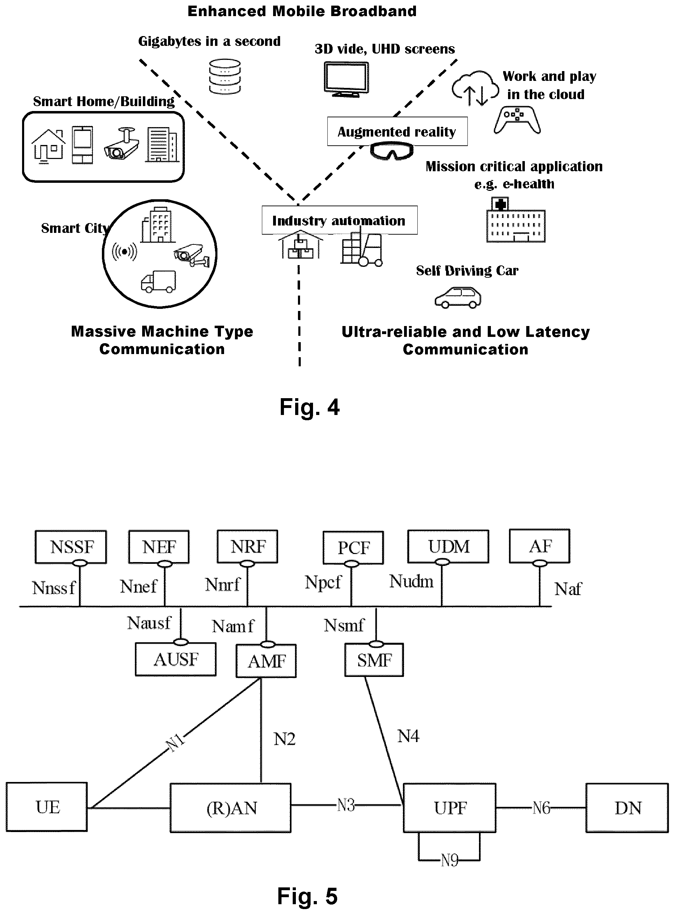

**Fig. 4** illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. ITU-R M.2083 Fig.2).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution, including factory automation, transport industry, and electrical power distribution. The tighter requirements are higher reliability (up to 10⁻⁶ level), higher availability, packet sizes of up to 256 bytes, time synchronization down to the order of a few µs where the value can be one or a few µs depending on frequency range and short latency in the order of 0.5 to 1 ms in particular a target user plane latency of 0.5 ms, depending on the use cases.

Moreover, for NR URLLC, several technology enhancements from physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising fourteen symbols).

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

Fig. 5 illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to access directly the Network Functions use the external exposure framework via the NEF to interact with relevant Network Functions.

**Fig. 5** shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF,UPF, etc) of the 5GC to establish a PDU session including a radio bearer between a gNodeB and a UE in accordance with the QoS requirement and control circuitry, which, in operation, performs the services using the established PDU session.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sildelink control information (SCI) or the 2nd stage SCI.

### Terminal

A ***terminal*** or ***user terminal*** or ***user device*** or ***mobile station*** or ***mobile node*** is referred to in the LTE and NR as a ***user equipment (UE)**.* This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a ***scheduling node*** or ***network node***, e.g. forming a part of the network for providing services to terminals. In particular, a base station may provide wireless access to terminals. Communication between the terminal and the base station is typically standardized and may be defined by different layers, such as PHY, MAC, RRC etc. In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term ***base station*** or ***radio base station*** here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Downlink control channel monitoring, PDCCH, DCI

Many of the functions operated by the UE involve the monitoring of a downlink control channel (e.g. the PDCCH, see 3GPP TS 38.300 v15.6.0, section 5.2.3) to receive e.g. particular control information or data destined to the UE.

A non-exhaustive list of these functions is given in the following:
- a paging message monitoring function,
- a system information acquisition function,
- signalling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).

Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).

Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

### UE identifications

RNTI stands for Radio Network Temporary Identifier. For instance, an RNTI can used to differentiate and identify a UE in the radio cell. Further, an RNTI can also identify a specific radio channel, a group of UEs in case of paging, a group of UEs for which power control is issued by the eNB, system information transmitted for all the UEs by 5G gNB. 5G NR defines numerous different identifications for the UE, some of which are presented in the following table (see 3GPP TS 38.321 v15.8.0, section 7.1).

| **RNTI** | **Usage** | **Transport Channel** | **Logical Channel** |
|---|---|---|---|
| P-RNTI | Paging and System Information change notification | PCH | PCCH |
| SI-RNTI | Broadcast of System Information | DL-SCH | BCCH |
| RA-RNTI | Random Access Response | DL-SCH | N/A |
| Temporary C-RNTI | Contention Resolution (when no valid C-RNTI is available) | DL-SCH | CCCH, DCCH |
| Temporary C-RNTI | Msg3 transmission | UL-SCH | CCCH, DCCH, DTCH |
| C-RNTI, MCS-C-RNTI | Dynamically scheduled unicast transmission | UL-SCH | DCCH, DTCH |
| C-RNTI | Dynamically scheduled unicast transmission | DL-SCH | CCCH, DCCH, DTCH |
| MCS-C-RNTI | Dynamically scheduled unicast transmission | DL-SCH | DCCH, DTCH |
| C-RNTI | Triggering of PDCCH ordered random access | N/A | N/A |
| CS-RNTI | Configured scheduled unicast transmission (activation, reactivation and retransmission) | DL-SCH, UL-SCH | DCCH, DTCH |
| CS-RNTI | Configured scheduled unicast transmission (deactivation) | N/A | N/A |
| TPC-PUCCH-RNTI | PUCCH power control | N/A | N/A |
| TPC-PUSCH-RNTI | PUSCH power control | N/A | N/A |
| TPC-SRS-RNTI | SRS trigger and power control | N/A | N/A |
| INT-RNTI | Indication pre-emption in DL | N/A | N/A |
| SFI-RNTI | Slot Format Indication on the given cell | N/A | N/A |
| SP-CSI-RNTI | Activation of Semi-persistent CSI reporting on PUSCH | N/A | N/A |
| NOTE: The usage of MCS-C-RNTI is equivalent to that of C-RNTI in MAC procedures (except for the C-RNTI MAC CE). | | | |

Apart from the above-identified RNTIs, there can be further IDs, such as the Inactive-RNTI (I-RNTI) (see TS 38.331 v15.8.0 e.g. section 6.3.2). The Inactive-RNTI is used for a UE in the RRC_INACTIVE state and for example in the process of identifying and locating the suspended UE context of that UE. According to one implementation, the network assigns the I-RNTI when the UE moves (e.g. from RRC_CONNECTED) to the RRC_INACTIVE state (e.g. as part of the RRCRelease message within SuspendConfig). There are two types of I-RNTIs, namely the full I-RNTI and the short I-RNTI. The network can inform the UE (e.g. as part of SIB1, System Information Block 1), which I-RNTI to use when resuming the connection. The full I-RNTI is a bit string of length 40 bits, while the short I-RNTI is a bit string of length 24 bits.

### Random Access procedure

Similar to LTE, 5G NR provides a RACH (Random Access Channel) procedure (or simply random access procedure). For instance, the RACH procedure can be used by the UE to access a cell it has found. The RACH procedure can also be used in other contexts within NR, for example:
- For handover, when synchronization is to be established to a new cell;
- To reestablish uplink synchronization to the current cell, if synchronization has been lost due to a too long period without any uplink transmission from the device;
- To request uplink scheduling, if no dedicated scheduling request resource has been configured for the device.

There are numerous events that may trigger the UE to perform a random access procedure (see 3GPP TS 38.300, section 9.2.6), including the following. The random access procedure is triggered by a number of events:
- Initial access from RRC_IDLE;
- RRC Connection Re-establishment procedure;
- DL or UL data arrival during RRC_CONNECTED when UL synchronisation status is "non-synchronised";
- UL data arrival during RRC_CONNECTED when there are no PUCCH resources for SR available;
- SR failure;
- Request by RRC upon synchronous reconfiguration (e.g. handover);
- Transition from RRC_INACTIVE;
- To establish time alignment for a secondary TAG;
- Request for Other SI (see clause 7.3);
- Beam failure recovery;
- Consistent UL LBT failure on SpCell.

A mobile terminal can be scheduled for uplink transmission, if its uplink transmission is time synchronized. Therefore, the Random Access Channel (RACH) procedure plays a role as an interface between non-synchronized mobile terminals (UEs) and the orthogonal transmission of the uplink radio access. For instance, the Random Access is used to achieve uplink time synchronization for a user equipment, which either has not yet acquired, or has lost, its uplink synchronization. Once a user equipment has achieved uplink synchronization, the base station can schedule uplink transmission resources for it. One scenario relevant for random access is where a user equipment in RRC_CONNECTED state, handing over from its current serving cell to a new target cell, performs the Random Access Procedure in order to achieve uplink time-synchronization in the target cell.

There can be at least two types of random access procedures, allowing access to be either contention based (i.e. implying an inherent risk of collision), or contention free (non-contention based). An exemplary definition of a random access procedure can be found in 3GPP TS 38.321, v16.1.0 section 5.1.

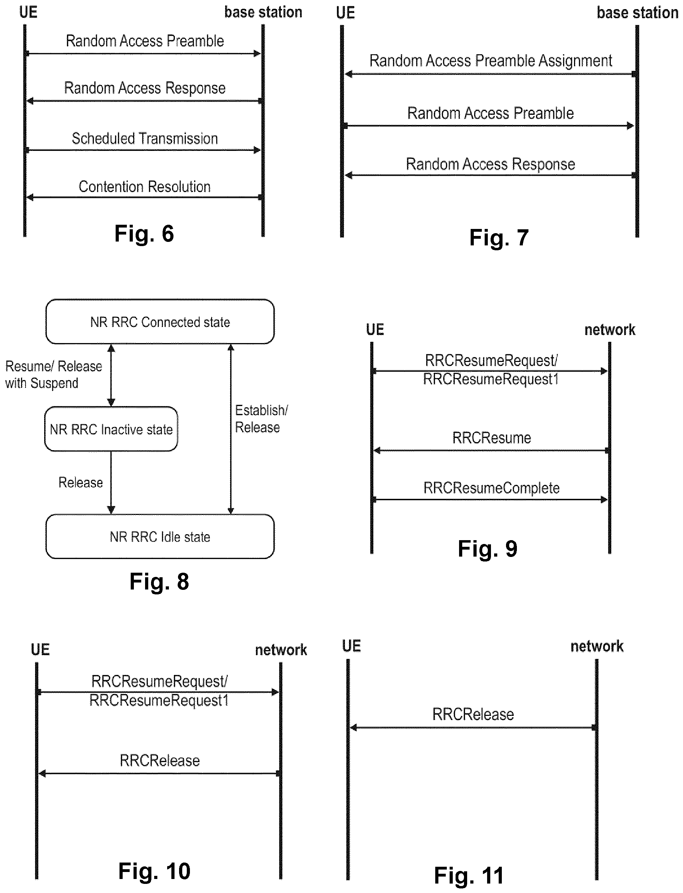

The RACH procedure will be described in the following in more detail, with reference to **Fig. 6** and 7. In the following, the contention-based random access procedure is being described in more detail with respect to **Fig. 6**. This procedure consists of four "steps" and thus can be termed for example as a 4-step RACH procedure. First, the user equipment transmits a random access preamble on the Physical Random Access Channel (PRACH) to the base station (i.e. message 1 of the RACH procedure). After the base station has detected a RACH preamble, it sends a Random Access Response (RAR) message (message 2 of the RACH procedure) on the PDSCH (Physical Downlink Shared Channel) addressed on the PDCCH with the (Random Access) RA-RNTI identifying the time-frequency and slot in which the preamble was detected. If multiple user equipments transmitted the same RACH preamble in the same PRACH resource, which is also referred to as collision, they would receive the same random access response message. The RAR message may convey the detected RACH preamble, a timing alignment command (TA command) for synchronization of subsequent uplink transmissions based on the timing of the received preamble, an initial uplink resource assignment (grant) for the transmission of the first scheduled transmission and an assignment of a Temporary Cell Radio Network Temporary Identifier (T-CRNTI). This T-CRNTI is used by the base station to address the mobile(s) whose RACH preamble was detected until the RACH procedure is finished, because the "real" identity of the mobile at this point is not yet known by the base station.

The user equipment monitors the PDCCH for reception of the random access response message within a given time window (e.g. termed RAR reception window), which can be configured by the base station. In response to the RAR message received from the base station, the user equipment transmits the first scheduled uplink transmission on the radio resources assigned by the grant within the random access response. This scheduled uplink transmission conveys the actual message with certain functionality such as the RRC Connection Request, a RRC Resume Request or the buffer status report.

In case of a preamble collision having occurred in the first message of the RACH procedure (i.e. multiple user equipment have sent the same preamble on the same PRACH resource), the colliding user equipments will receive the same T-CRNTI within the random access response and will also collide in the same uplink resources when transmitting their scheduled transmission in the third step of the RACH procedure. In case the scheduled transmission from one user equipment is successfully decoded by the base station, the contention remains unsolved for the other user equipment(s). For resolution of this type of contention, the base station sends a contention resolution message (a fourth message) addressed to the C-RNTI or Temporary C-RNTI. This concludes the procedure.

**Fig. 7** is illustrating the contention-free random access procedure, which is simplified in comparison to the contention-based random access procedure. The base station provides in a first step the user equipment with the dedicated preamble to use for random access so that there is no risk of collisions, i.e. multiple user equipments transmitting the same preamble. Accordingly, the user equipment subsequently sends the preamble that was signaled by the base station in the uplink on a PRACH resource. Since the case that multiple UEs are sending the same preamble is avoided for a contention-free random access, essentially, a contention-free random access procedure is finished after having successfully received the random access response by the UE.

3GPP also defines a 2-step (contention-based) RACH procedure for 5G NR, where a message 1 (termed as MsgA), that corresponds to messages 1 and 3 in the four-step LTE/NR RACH procedure, is transmitted at first. The MsgA of the 2-step RACH type includes a preamble on the Physical Random Access Channel (PRACH) and a payload on the Physical Uplink Shared Channel (PUSCH). After MsgA transmission, the UE monitors for a response from the gNB within a configured time window. Then, the gNB will respond with a message 2 (termed as MsgB), corresponding to messages 2 and 4 of the 4-step LTE/NR RACH procedure. This MsgB can include e.g. a Success random access response (RAR), a Fallback RAR, and optionally a backoff indication. If contention resolution is successful upon receiving the Success RAR, the UE ends the random access procedure; while if Fallback RAR is received in MsgB, the UE performs message 3 transmission (as in 4-step RACH procedure) and monitors contention resolution. Some further exemplary assumptions are made for the 2-step RACH procedure, such as that the UE, after deciding on the RACH type (e.g. the 2-step RACH), keeps retrying that same RACH type until failure. But there may be also the possibility that the UE can switch to the 4-step RACH procedure after certain reattempts of transmitting MsgA.

Moreover, the network may semi-statically determine radio resources, to be used for performing the 2-step RACH procedure and the 4-step RACH procedure, that are exclusive from one another. The radio resources used for transmitting the first message in the RACH procedure include at least the RACH occasion as well as the preambles. For instance, in the 2-step RACH procedure, the first message MsgA uses not only the PRACH resource (e.g. the RACH occasion and preamble) but also the associated PUSCH resources.

Generally, for RACH preambles, see for example, 3GPP TS 38.211 V16.2.0, "Table 6.3.3.2-2: Random access configurations for FR1 and paired spectrum/supplementary uplink" and section 6.3.3.2, "Mapping to physical resources".

### RRC States (RRC_Connected, RRC_Inactive, RRC Idle)

In LTE, the RRC state machine consisted of only two states, the RRC idle state (mainly characterized by high power savings, UE autonomous mobility and no established UE connectivity towards the core network) and the RRC connected state in which the UE can transmit user plane data while mobility is network-controlled to support lossless service continuity. In connection with 5G NR, the LTE-related RRC state machine is extended with an inactive state (see e.g. TS 38.331 v16.1.0, Figures 4.2.1-1 and 4.2.1-2), as explained in the following.

The RRC in NR 5G (see TS 38.331, section 4) supports an idle state, an inactive state and a connected state, in particular, RRC Idle, RRC Inactive, and RRC Connected. A UE is either in RRC_CONNECTED state or in RRC_lNACTIVE state when an RRC connection has been established. If this is not the case, i.e. no RRC connection is established, the UE is in RRC_IDLE state. The following state transitions are possible as illustrated in **Fig. 8**:
- from RRC_IDLE to RRC_CONNECTED, following e.g. the "connection establishment" procedure;
- from RRC_CONNECTED to RRC_IDLE, following e.g. the "connection release" procedure;
- from RRC_CONNECTED to RRC_INACTIVE, following e.g. the "connection release with suspend" procedure;
- from RRC_INACTIVE to RRC_CONNECTED, following e.g. the "connection resume" procedure;
- from RRC_INACTIVE to RRC_IDLE (uni-directional), following e.g. the "connection release" procedure.

The new RRC state, RRC Inactive, is defined for the new radio technology of 5G 3GPP, so as to provide benefits when supporting a wider range of services such as the eMBB (enhanced Mobile Broadband), mMTC (massive Machine Type Communications) and URLLC (Ultra-Reliable and Low-Latency Communications) which have very different requirements in terms of signalling, power saving, latency etc. The new RRC Inactive state shall thus be designed to allow minimizing signaling, power consumption and resource costs in the radio access network and core network while still allowing e.g. to start data transfer with low delay.

According to an exemplary 5G NR implementation, the different states are characterized as follows (see section 4.2.1 of TS 38.331):
"- ***RRC_IDLE:***
   - *A UE specific DRX may be configured by upper layers;*
   - *UE controlled mobility based on network configuration;*
   - *The UE:*
      - *Monitors Short Messages transmitted with P-RNTI over DCI;*
      - *Monitors a Paging channel for CN paging using 5G-S-TMSI;*
      - *Performs neighbouring cell measurements and cell (re-)selection;*
      - *Acquires system information and can send SI request (if configured).*
      - *Performs logging of available measurements together with location and time for logged measurement configured UEs.*
- ***RRC_INACTlVE:***
   - *A UE specific DRX may be configured by upper layers or by RRC layer;*
   - *UE controlled mobility based on network configuration;*
   - *The UE stores the UE Inactive AS context;*
   - *A RAN-based notification area is configured by RRC layer;*
   *The UE:*
   - *Monitors Short Messages transmitted with P-RNTI over DCI;*
   - *Monitors a Paging channel for CN paging using 5G-S-TMSI and RAN paging using full-I-RNTI;*
   - *Performs neighboring cell measurements and cell (re-)selection;*
   - *Performs RAN-based notification area updates periodically and when moving outside the configured RAN-based notification area;*
   - *Acquires system information and can send SI request (if configured).*
   - *Performs logging of available measurements together with location and time for logged measurement configured UEs.*
- ***RRC_CONNECTED:***
   - *The UE stores the AS context;*
   - *Transfer of unicast data to*/*from UE;*
   - *At lower layers, the UE may be configured with a UE specific DRX;*
   - *For UEs supporting CA, use of one or more SCells, aggregated with the SpCell, for increased bandwidth;*
   - *For UEs supporting DC, use of one SCG, aggregated with the MCG, for increased bandwidth;*
   - *Network controlled mobility within NR and to*/*from E-UTRA;*
   - *The UE:*
      - *Monitors Short Messages transmitted with P-RNTI over DCI (see clause 6.5), if configured;*
      - *Monitors control channels associated with the shared data channel to determine if data is scheduled for it;*
      - *Provides channel quality and feedback information;*
      - *Performs neighbouring cell measurements and measurement reporting;*
      - *Acquires system information;*
      - *Performs immediate MDT measurement together with available location reporting."*

According to the characteristics of the RRC Inactive state, for the Inactive UE the connection (both for user plane and control plane) is maintained with RAN and the core network. More specifically, in RRC Inactive, although the connection still exists, it is suspended, or put differently the connection is not active anymore. In NR, when UE is in RRC_Inactive state, NG (next generation) signaling is kept alive between gNB to AMF. GTP-U (GPRS Tunneling Protocol User Plane) also remain alive between gNB to UPF. UE context is stored at UE and gNB. On the other hand, in RRC Connected state, the connection exists and is active, e.g. in the sense that it is used for a data transmission. In RRC Idle state, the UE has no RRC connection with the RAN and the core network, which also means that e.g. the radio base station does not have any context of the UE and e.g. does not know the identification of the UE and does not have security parameters relating to the UE to be able to properly decode data transmitted by the UE (security e.g. ensures integrity of the transmitted data). UE context may be available in the core network, but would have to be fetched first by the radio base station.

An UE while being in RRC_IDLE or RRC_CONNECTED listens for paging messages. Such a paging mechanism include logical channels and transport channels for paging. The Paging Control Channel (PCCH) is a logical downlink channel that is used for transmitting paging information from the network to devices. The Paging Channel (PCH) is a transport channel used for carrying paging information from the PCCH logical channel. The PCH supports discontinuous reception, DRX, to enable the UE to save battery power by waking up at a specific time to receive the PCH. The PCH is mapped onto PDSCH in NR.

In addition, the paging mechanism (may also be called e.g. notification mechanism) for user equipments in the radio cell is based on so called radio access network, RAN,-based notification areas (in short RNAs). The radio access network should be aware of the current RNA the user equipment is located in, and the user equipment may assist the gNB to track the UE moving among various RNAs. The RNA can be UE-specific.

One example of an RRC resume procedure to move the UE from the RRC_Inactive state to the RRC_Connected state (see TS 38.331 section 5.3.13) is explained in the following with reference to **Fig. 9**. The purpose of this procedure is to resume a suspended RRC connection (may include resuming signaling and data radio bearers).

The procedure allows to transmit either the RRCResumeRequest message or the RRCResumeRequest1 message. When transmitting the RRCResumeRequest message, the short I-RNTI (e.g. truncated I-RNTI) is used as the UE identity (exemplary termed "resumeldentity"). When transmitting the RRCResumeRequest1 message, the full I-RNTI is used as the UE identity (exemplary termed "resumeldentity"). UE checks the indication "useFullResumeID" in SIB1 and determines to transmit either the RRCResumeRequest or the RRCResumeRequest1 message. If the "useFullResumeID" indicates "true", the UE will transmit RRCResumeRequest1 with full I-RNTI; otherwise, the UE will transmit RRCResumeRequest with short I-RNTI. The actions the UE performs for the RRC Resume procedure (see section 5.3.13.4 of TS 38.331) include resuming the SRB2 and all DRBs (which were suspended when entering the RRC Inactive state, see below release procedure).

The RRCResume procedure can be also used to perform the RNA update upon UE moving out of the configured RNA. In this case, the network sends an RRCRelease instead of RRCResume as the response to the RRCResumeRequest/RRCResumeRequest1 message, as shown in **Fig.10**. The UE remains in RRC_INACTIVE after receiving the RRCRelease message.

One example of a subsequent RRC connection release procedure to transition the UE from the RRC_Connected state to the RRC_Inactive state (see TS 38.331 section 5.3.8) is explained in the following with reference to **Fig. 11**. The purpose of this procedure is to release the RRC connection or to suspend the RRC connection. For instance, the network initiates the RRC connection release procedure to transit a UE in RRC_CONNECTED to RRC_IDLE or to RRC_INACTIVE. The actions the UE performs for the RRC Connection Release procedure (see section 5.3.8.3 of TS 38.331) include suspending all SRB(s) (Signaling Radio Bearers) and DRB(s) (Data Radio Bearers) except SRB0, in case the release is done with suspend (e.g. "RRCRelease includes suspendConfig"). Correspondingly, the UE in RRC Inactive state does not have any non-suspended or active DRB (UE only has suspended DRBs). SRB0, which is kept active, even in the RRC Inactive state, can be used by the UE e.g. for performing the RACH procedure, e.g. when carrying RRC messages, such as the RRCResumeRequest, RRCResumeRequest1, RRCSetupRequest.

The term ***inactive state*** used in the application is to be broadly understood as a state in which regular and extensive data exchange between the UE and the base station is not possible or not common. For instance, the UE, when in inactive state, (e.g. called "inactive UE") may not have actively-used data connections, but still has one or more inactive data connections (e.g. could also be called existent but not currently-used) that allow a (small) data transmission without the need to resume the data connection first. For sake of completion, the UE in ***the idle state*** does not have data connections over which the UE could transmit data to the base station, while the UE in ***connected state*** has one or more active data connections that can be immediately used to carry data to the base station.

### Small data transmissions

The characteristics of the small-data transmissions that are targeted in this disclosure refer to any service with the characteristics that data bursts in UL/DL are small and optionally rather infrequent with no strict requirements on delay. For instance, a single data transmission that it so small that it can be sent by the UE in one transmission (e.g. in RACH or one CG occasion, see below) can be considered a small-data transmission. Typical non-limiting examples of traffic characteristics for small-data transmissions are captured in the following table (see TR 25.705 v13.0.0 section 5).

### Characteristics of the small-data transmissions

| **Traffic parameter** | **Value** |
|---|---|
| application packet size | 100 bytes (UL); 100 bytes (DL) |
| latency¹ | 5s to 30min; 1 hour for no mobility (static, pedestrian) |
| frequency | every minute and up to monthly |
| NOTE 1: latency is the duration from when the packet arrives at the buffer until it is completely transmitted (delay tolerance of the application). | |

Another different possible exemplary definition can depend on the configuration of the gNB. For instance, the gNB can define that data below a certain threshold (e.g. 1000 kbyte) can be considered small data, whereas data above that threshold is not to be considered small data. This threshold could e.g. be defined in connection with the buffer status of the UE.

Alternatively, a definition of what small-data is could also be fixed by a suitable 3GPP standard, e.g. providing a similar data amount threshold as described above.

### Data transmission by UE in RRC Inactive state - SDT Procedure

In more detail, 5G NR supports the RRC_INACTIVE state, and UEs with infrequent (periodic and/or non-periodic) data transmission are generally maintained by the network in the RRC_INACTIVE state. Until Rel-16, the RRC_INACTIVE state does not support data transmissions. Small data transmissions in the inactive state are considered in 3GPP TSG-RAN2 Meeting #117e R2-2204216 (see section 5.x). Hence, the UE has to resume the connection (e.g. move to RRC_CONNECTED state) for any DL (MobileTerminated) and UL (MobileOriginated) data. Connection setup (or resume) and subsequently release to RRC_INACTIVE state would have to happen for each data transmission, however small and infrequent the data packets are. This results in unnecessary power consumption and signalling overhead.

Specific examples of small and infrequent data traffic include the following use cases:
- Smartphone applications:
   ∘ Traffic from Instant Messaging services (whatsapp, QQ, wechat etc.)
   ∘ Heart-beat/keep-alive traffic from IM/email clients and other apps
   ∘ Push notifications from various applications
- Non-smartphone applications:
   ∘ Traffic from wearables (periodic positioning information etc.)
   ∘ sensors (Industrial Wireless Sensor Networks transmitting temperature, pressure readings periodically or in an event triggered manner etc.)
   ∘ smart meters and smart meter networks sending periodic meter readings Small-data transmissions can support various different packet sizes and can have different traffic requirements.

For example, for a Heart-beat traffic/keep alive traffic the packet size is around 50 bytes - 100 bytes. Furthermore, a heart-beat message arrives every 5 minutes or in the order of seconds. For smart meter that send periodic meter readings, the packet size is around 12 -100 bytes for regular transmission. For a sensor that sends periodic traffic or event trigger traffic (aperiodic traffic), the packet size is around 8 bytes-128 bytes. The instant message (traffic pattern is not deterministic) can deliver text, photo, video etc., and the packet size varies from 100 bytes to 1000 bytes. For a push notification, the traffic pattern

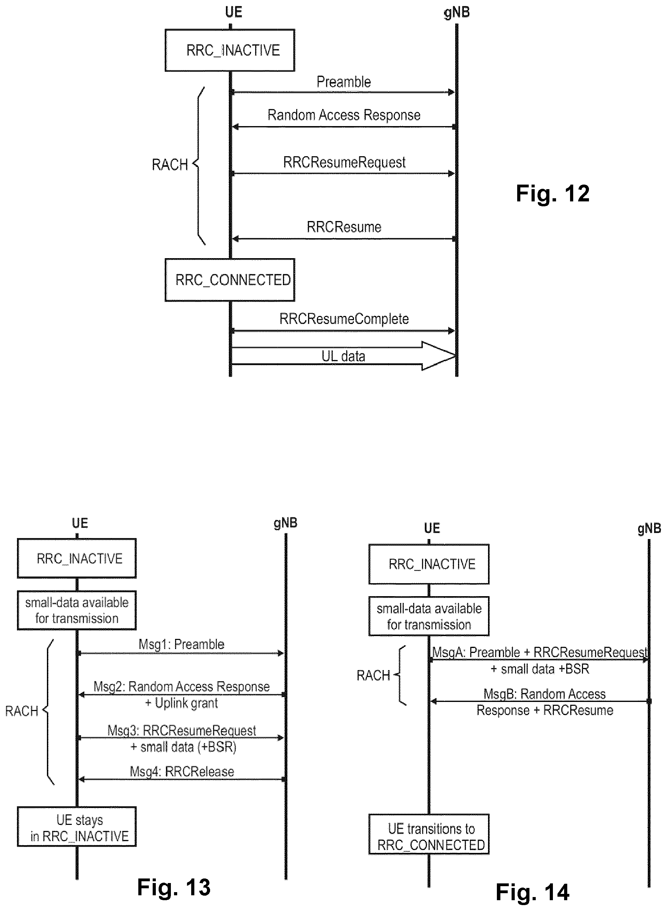

An exemplary procedure (in this case a 5G-NR-compliant prior art solution) to enable a UE in the RRC Inactive state, after transition to the RRC Connected state, to transmit (small) data will be briefly explained in the following with reference to **Fig. 12**. As apparent from the figure, the UE is assumed to be in RRC_Inactive state, which may e.g. involve that the UE (and gNB) has all data radio bearers suspended, and that no data can be transmitted to the gNB. In order to enable the UE to transmit data, the UE has to be first transitioned into the RRC Connected state, which can be done by the UE requesting to resume the RRC connection (here transmitting *RRCResumeRequest*) as part of the RACH procedure (in Fig. 12, e.g. using the 4-step RACH procedure).

In detail, the UE may transmit the preamble to the current gNB, then receives a corresponding random access response with a (small) UL grant of radio resources, which are used by the UE to transmit the RRCResumeRequest message as msg3 of the RACH procedure. Finally, the new gNB provides the RRCResume message to the UE, which in turn then transitions to the RRC Connected state, including the resumption of all data radio bearers. In RRC_Connected state, the UE is then able to transmit the UL data.

The gNB may decide that a UE should indeed by transitioned to RRC_CONNECTED state, after this UL small data transmission. The control in said respect may thus rest with the gNB, although the UE might request to resume the RRC connection. One exemplary possibility is that the gNB takes into account the buffer status report, that the UE could transmit e.g. in the Msg3 or MsgA, to decide whether the UE should transition to the RRC_CONNECTED state or not. The buffer status report indicates the actual amount of data in the UE buffer. For instance, if the buffer status report indicates a large amount of data in the UE buffer, the gNB might decide to transition the UE from RRC_INACTIVE to RRC_CONNECTED state (e.g. by gNB sending *RRCResume* message). On the other hand, if the buffer status report indicates only little amount of data in the UE buffer, the gNB might decide to keep the UE in the RRC_INACTIVE state (e.g. by gNB sending RRCRelease message). Furthermore, also the absence of the buffer status report in the Msg3/MsgA may provide an indication to the gNB, e.g. that no further data is available in the UE buffer and the UE can stay in RRC_INACTIVE.

As can be appreciated from the description of Fig. 12, the above process, according to which the UE first needs to transition from the inactive state to the connected state such that the UE can send any user data in the uplink, introduces latency and consumes significant UE power for each transmission of user data. Moreover, the signaling overhead caused for INACTIVE-state UEs when transmitting small data packets is a general problem, and will even be exacerbated with more UEs in 5G NR.

Therefore, 3GPP is intending to enable the RRC_Inactive UE to transmit (small) data in the uplink without changing the UE state to RRC Connected. In general, any device that has intermittent (small) data packets, when in the INACTIVE state, will benefit from enabling (small) data transmissions in the INACTIVE state.

The following assumptions, made for Fig. 13 and 14 and also for subsequently describing the concepts, solutions and variants, are to be considered only as exemplary and not as limiting the RACH-based small-data transmissions.

Moreover, when assuming a RACH-based small-data uplink transmission as an example, the UE can use either the 2-step RACH or 4-step RACH to send small data in the uplink (see MsgA or Msg3), and simplified and exemplary RACH-based small-data uplink transmission procedures are illustrated in Fig. 13 and 14. In both Fig. 13 and 14 it is exemplarily assumed that the UE is already in RRC_INACTIVE state and has small-data available for transmission. **Fig. 13** assumes a 4-step RACH procedure and illustrates how the UE transmits the small data with the Msg3. **Fig. 14** assumes a 2-step RACH procedure and illustrates how the UE transmits the small data with the MsgA.

According to one example, the control message and the small data are transmitted together to the base station, e.g. together in the same transport block, where the UE builds the transport block using the resources and multiplexes data and signaling together in the same transport block of the MAC layer. For the 4-step RACH case, the small data is transmitted in the Msg3, based e.g. on the radio resources granted through the uplink grant received from the gNB in the Msg2. For the 2-step RACH case, the small data is transmitted in the MsgA, e.g. using radio resources that are selected by the UE from some previously-configured radio resources, e.g. in connection with the selected RACH preamble.

Moreover, Fig. 13 and 14 illustrate that the buffer status report can be included in the Msg3 respectively MsgA, although the BSR is only illustrated within parentheses to reflect that including the BSR is merely an exemplary possibility. For instance, in Fig. 13 it is exemplarily assumed that the gNB decides to keep the UE in RRC_Inactive state, e.g. because the BSR is either absent or indicates only little uplink small data in the UE buffer. Correspondingly, an RRCRelease message is transmitted for the Msg4. On the other hand, in Fig. 14 it is exemplarily assumed that the gNB decides to transition the UE to the RRC_Connected state, e.g. because the BSR indicates a significant amount of uplink data in the UE buffer that has to be transmitted by the UE. Correspondingly, an RRCResume message is transmitted for the MsgA.

Moreover, although in Fig. 13 the uplink grant is illustrated separately from the Random Access Response of Msg2, in Fig. 13 and in similar implementations in the following, the uplink grant may equally be considered as belonging to and being part of the Random Access Response.

In summary, a possible exemplary implementation of a small-data uplink transmission for RRC_INACTIVE UEs is possible and could be e.g. based on the RACH procedure, be it a 2-step or 4-step RACH procedure (see Fig. 13 and 14).

In the above, a single small-data uplink transmission (e.g. using the Msg3/MsgA of RACH) was discussed. Moreover, 3GPP agreed that it should be possible for a UE in RRC_INACTIVE state to send (and possibly receive) multiple UL (and respectively DL) transmissions using a same procedure without transitioning to the RRC_CONNECTED state.

For example, a UE may be informed for downlink SDT (DL-SDT), i.e. mobile-terminated SDT (MT-SDT) by a network node if one or more of the following conditions are fulfilled:
- all pending data at the network node (in DL) is mapped to a radio bearer (RB) configured for SDT,
- data volume of the pending DL data across all RBs configured for SDT is less than or equal to a data volume threshold of the network node,
- Reference Signal Received Power (RSRP) of the DL is less than RSRP threshold for SDT procedure,
- UE supports SDT.

The term ***SDT procedure*** or ***procedure for transmitting SDT DRB data*** thus refers to a procedure to transmit data in an inactive state (e.g., RRC_INACTIVE), and not necessarily to the amount of the data transmitted by the SDT procedure. Accordingly, the term ***small data*** and ***SDT DRB data*** refer to data that can be transmitted in an inactive state (of the UE), and not necessarily to the size of said data. In particular, small data or SDT DRB data may be any data of a DRB that is configured for transmission in an inactive state (such a DRB is here also referred to as a SDT DRB). Likewise, the term ***non-SDT DRB data*** refers to data that cannot be transmitted in an inactive state (of the UE) and/or data that can only be transmitted in a connected state (of the UE). In particular, non-SDT DRB data may be any data of a DRB that is not configured for transmission in an inactive state (such a DRB is here also referred to as a non-SDT DRB).

A procedure for transmitting SDT DRB data may be a procedure based on and/or initiated in a RACH procedure. In particular, said RACH procedure may be a 4-step RACH or a 2-step RACH procedure. More specifically, an SDT procedure based on a RACH procedure here refers to an SDT procedure initiated in a RACH procedure. This includes SDT procedures in which only a single transmission of small data is performed. e.g., during the RACH procedure as shown in Figs. 13 and 14, but also SDT procedures in which more than one transmission of small data is performed during and/or following the RACH procedure. Furthermore, this also includes SDT procedures that do not terminate together with the RACH procedure in which they were initiated.

Summarizing, an SDT procedure based on or initiated in a RACH procedure may thus be a procedure in which one or more transmissions of data are performed in an inactive state, and i) at least one of said one or more transmissions is performed, by the UE, together with a message of the RACH procedure, and/or ii) an indication is transmitted, by the UE, together with a message of the RACH procedure, the indication indicating a request for a resource grant for small data transmission.

However, the term SDT procedure is not limited to RACH based SDT procedures, as it also includes data transmissions in an inactive state that use a configured grant (CG).

Multiple devices (UEs) may be allowed to share periodic radio resources, called a configured grant (CG) (which facilitates reducing the waste of the periodic radio resources compared to the LTE SPS). On the other hand, there is also the possibility that the gNB defines the periodic radio resources in such a manner that they are not or nor completely shared between multiple UEs. The gNB allocates configured-grant radio resources to one or multiple UEs, which then randomly utilize these periodic radio resources when they have to transmit data (e.g. small data, see later sections). With the CG, the network eliminates packet transmission delays caused by a specific scheduling request procedure that would have to be performed otherwise before being able to send data. Thereby, the utilization ratio of allocated periodic radio resources may be increased as well.

There are two types of grant free configuration schemes supported in 3GPP Release 16, namely Type 1 and Type 2 (see 3GPP 38.300 v16.6.0: "NR; NR and NG-RAN Overall Description; Stage 2 (Release 16)", section 10.3).

According to this exemplary implementation of TS 38.300, using the Type-1 CG, the RRC directly provides the configured uplink grant to the UE(s), e.g. including its periodicity.

With a configured grant of Type 2, the RRC defines the periodicity of the configured uplink grant while a PDCCH message addressed to the CS-RNTI of the UE(s) can either signal and activate the configured uplink grant, or deactivate it; a PDCCH addressed to the CS-RNTI indicates that the uplink grant can be implicitly reused according to the periodicity defined by RRC, until deactivated. In other words, an additional L1 signaling (e.g. the PDCCH) is introduced, where the uplink is semi-persistently scheduled by an RRC-based uplink grant that is activated/deactivated by a (de)activation DCI. RRC provides the higher layer parameters for the CG configuration.

In both cases, according to the exemplary 3GPP implementation, the RRC provides the grant configuration to the UE through a higher-layer parameter called *ConfiguredGrantConfig.* (see TS 38.331 v16.5.0, section 6.3.2 "*Radio resource control information elements*")*.*

A resource configuration for a CG may for instance comprise physical resources in a time domain and/or frequency domain, and/or reference signal (RS) parameters. The configuration parameter may further include a modulation and coding scheme (MCS) and/or a number of repetitions and/or a cycle period and/or a transport block size.

More specifically, the UE may initiate a CG-based SDT procedure by transmitting, using configured CG resources, a corresponding indication to the scheduling device. The UE may start transmission of the SDT DRB data together with the transmission of the indication or with a later transmission, which may also use CG resources. For instance, upon arrival of SDT DRB data, the UE may multiplex the SDT DRB data with a RRCResumeRequest message and transmit them in the nearest CG resource. The CG resources are those UL grants that appear periodically and are configured to the UE before/upon UE entering into inactive state by a scheduling device.

### Data connections

The term "***data connection***" used herein can be understood as connection over which a transmission of data (e.g. small data) is possible, e.g. between a UE and a radio base station. In more detail, a UE without a data connection, e.g. even if connected with the radio base station based on a signaling connection, cannot immediately transmit data. Data in this context can be understood broadly as user data, e.g. from an application running on the UE, in contrast to e.g. control information which would be rather transmitted using a signaling connection.

In one exemplary implementation, according to the 5G NR standard, the data connection can be understood as a data radio bearer, DRB, and the signaling connection can be understood as a signaling radio bearer, SRB.

In some instances, the present application further distinguishes between different conditions of a data connection, e.g. non-existent, existent but suspended, existent but not used (could also be termed non-suspended or inactive), existent and currently used to transmit data (could also be termed active). Following this categorization of the data connection, a suspended data connection, although it exists, cannot be used immediately to transmit data (e.g. in the uplink), because it is suspended by both endpoints (e.g. the UE and the radio base station) and needs to be resumed first. On the other hand, a non-suspended data connection may allow an immediate data transmission (e.g. without any further procedure such as resuming the data connection). For example when referring to an exemplary 5G NR implementation as currently defined in the 3GPP standards, the UE in the RRC Inactive state will have one or more suspended data connections (DRBs are suspended); the UE in the RRC Connected state may have one or more active data connections and possibly other non-suspended data connections (that are currently not actively used); and the UE in the RRC Idle state will not have a data connection (neither suspended nor active). On the other hand, according to the improved data transmission procedure explained in the following, different from the currently defined 5G NR implementation in the 3GPP standards, the UE in the RRC Inactive state will have one or more non-suspended data connections available (these will be inactive because no data is being exchanged, until the small data transmission).

In this context, the present application explains that a data connection is used e.g. by the UE to transmit and/or receive the small data. In the present scenarios, the data connection is established between the UE and the base station. In one exemplary implementation, a data connection is to be broadly understood as being associated with certain parameters, relating to coding, security, encryption etc. Thus, from the transmitting side perspective, the UE applies these parameters associated with that data connection to the (small) data to be transmitted using this data connection. This may be done e.g. to ensure a particular Quality of Service. Correspondingly, from the receiving side perspective, the receiver may need to apply the converse processing (e.g. relating to coding, security, encryption, etc.) as in the transmitting side, so as to successfully decode the data transmitted via the data connection.

### Terminology

In the following, UEs, base stations, and procedures will be described for the new radio access technology envisioned for the 5G mobile communication systems, but which may also be used in LTE mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

### Embodiments

In general, as already indicated above, it may be desirable for a UE in an inactive state to receive multiple DL transmissions using a procedure without transitioning to a connected state.

In view thereof, the present disclosure provides techniques facilitating an efficient initialization of DL transmissions of small data. In particular, the disclosed procedures enable using paging messages and/or indications for small data to notify a UE about a mobile terminated (i.e. downlink) small data transmission (MT-SDT). Enabling MT-SDT in an inactive state may save UE power and may reduce signaling overhead.

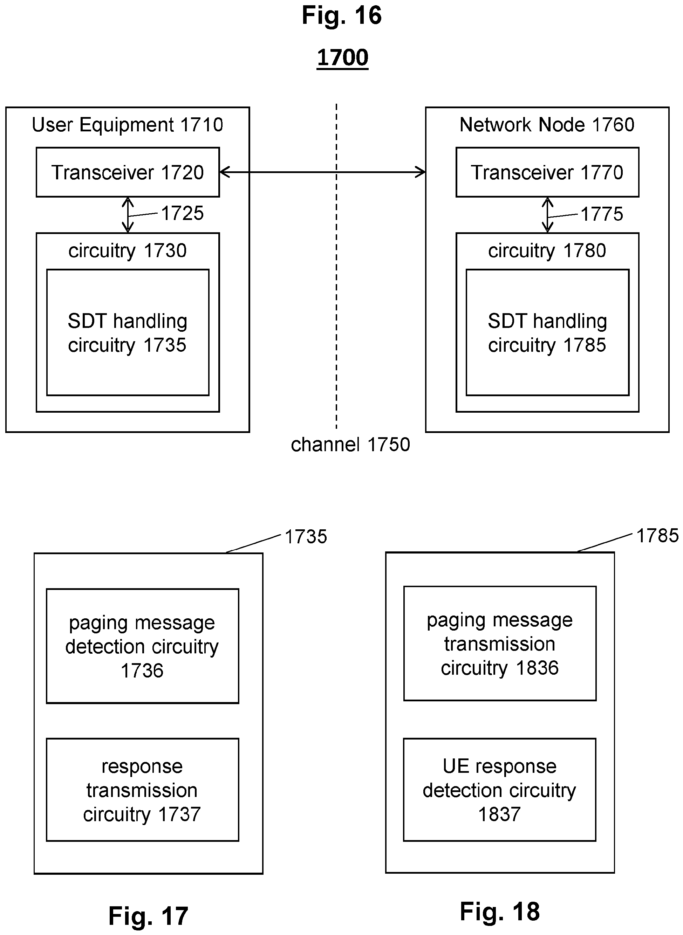

The present disclosure provides a network node and a user equipment well as a corresponding methods and programs. For instance, an integrated circuit can control a process of a UE or base station. As illustrated in **Fig. 16****,** user equipment 1710 and network node 1760 may communicate with each other over a wireless channel 1750 in a wireless communication system. For instance, the user equipment may be a NR user equipment, and the network node may be a base station or scheduling node such as a eNB, or a NR gNB, in particular a gNB in a Non-Terrestrial Network (NTN) NR system. An example of such communication system is illustrated in Fig. 16. The communication system 1700 may be a wireless communication system in accordance with the technical specifications of 5G, in particular a NR communication system. However, the present disclosure is not limited to 3GPP NR and may also be applied to other wireless or cellular systems such as NTNs. Fig. 16 illustrates a general, simplified and exemplary block diagram of a user equipment 1710 (also termed communication device) and a network node 1760. However, in general, a scheduling device may also be a terminal in case of a sidelink connection between two terminals. Moreover, in particular with respect to the use cases of URLLC; eMBB, and mMTC, the user equipment 1710 may also be a sensor device, a wearable device, or a connected vehicle, or a controller of an automated machine in an industrial factory. Further, a user equipment 1710 may be able to function as a relay between network node 1760 and another communication device (e.g. the disclosure is not limited to communication "terminals" or user "terminals").

The UE and eNB/gNB are communicating with each other over a (wireless) physical channel 1750 respectively using their transceivers 1720 (UE side) and 1770 (network node side). Together, the network node 1760 and the terminal 1710 form the communication system 1700. The communication system 1700 may further include other entities such as those shown in Fig. 1.

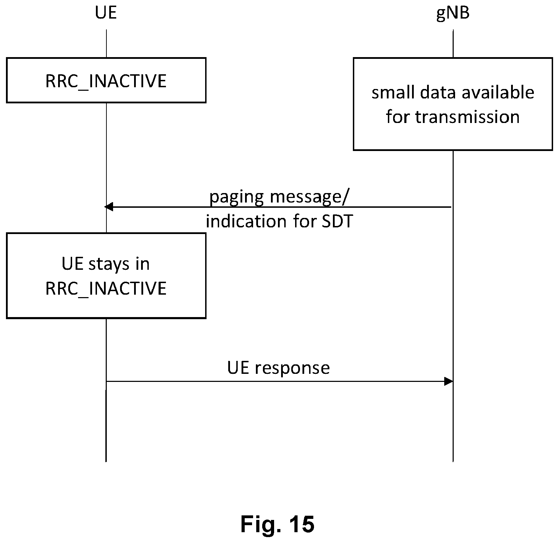

As shown in **Fig. 16** (left-hand side), according to a first exemplary embodiment, a user equipment (UE) 1710 is provided. The UE 1710 comprises a transceiver 1720 and circuitry 1730. The circuitry 1730, in operation, receives a paging message, while the UE in an inactive state. In response to the paging message, the circuitry remains in the inactive state for reception of small data. While the UE remains in the inactive state, a response to the paging message is transmitted to a network node within a transmission opportunity associated with pre-configured resources. Such paging while remaining in inactive mode is exemplarily shown in **Fig. 15**.

In general, the circuitry 1730 may control the transceiver 1720 to receive and/or transmit data. This is illustrated by an arrow 1725 which represents schematically an interface between the circuitry 1730 and the transceiver 1720, over which the control is performed. For example, the circuitry 1730 may instruct 1725 the transceiver 1720 to transmit said response to the paging message. Similarly, the circuitry 1730 may control the transceiver 1720 to receive the paging message, and receive the paging message from the transceiver over said interface 1725.

**Fig. 17** shows an exemplary functional structure of the circuitry 1730, in particular, the circuitry 1735 handling the small data. As shown, the SDT handling circuitry 1735 may include a paging message detection circuitry 1736 and a response transmission circuitry 1737. More specifically, circuitry 1736 detects a paging message, e.g., by monitoring pre-configured paging resources. Circuitry 1736 may also determine whether or not the arrival of small data is expected. The response transmission circuitry 1737 may determine whether to respond to a received paging message.

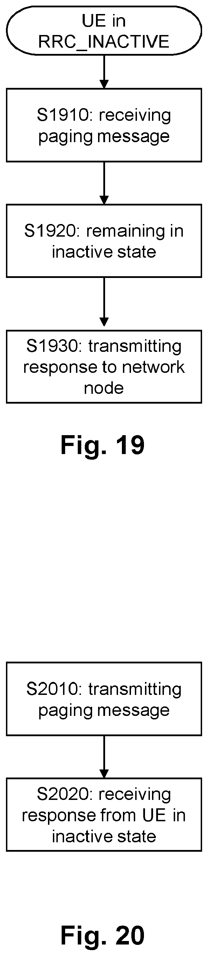

In correspondence with the above described UE, according to the first exemplary embodiment, a communication method to be performed by a UE in an inactive state is provided. As shown in **Fig. 19**, the method comprises the steps of:
- receiving (S1910) a paging message;
- in response to the paging message, remaining (S1920) in the inactive state for reception of the small data; and
- while remaining in the inactive state, transmitting (S1930) a response to the paging message to a network node within a transmission opportunity associated with pre-configured resources.

As also shown in Fig. 16 (right-hand side), according to the first exemplary embodiment, a network node 1760 is provided. The network node 1760 comprises a transceiver 1770 and a circuitry 1780. The circuitry 1780, in operation, transmits a paging message to a UE in an inactive state and receives a response from the UE in the inactive state, the response indicating that the UE is ready for reception of small data in the inactive state.

In general, the circuitry 1780 may control the transceiver 1770 to receive and/or transmit data. This is illustrated by an arrow 1775 which represents schematically an interface between the circuitry 1780 and the transceiver 1770, over which the control is performed. For example, the circuitry 1780 may instruct 1775 the transceiver 1770 to transmit said paging message. Similarly, the circuitry 1780 may control the transceiver 1770 to receive the response to the paging message, and receive the response from the transceiver over said interface 1775.

**Fig. 18** shows an exemplary functional structure of the SDT handling circuitry 1785. In particular, the SDT handling circuitry 1785 may include a paging message transmission circuitry 1836 and an UE response detection circuitry 1837. Circuitry 1836 may be responsible for transmitting a paging message and/ or an indication for SDT. Furthermore, circuitry 1837 may be responsible for receiving a response from the UE in an inactive state.

Furthermore, in correspondence with the above described base station, a communication method to be performed by a network node is provided. As shown in **Fig. 20**, the method comprising the steps of:
- transmitting (S2010) a paging message to a UE in an inactive state; and
- receiving (S2020) a response from the UE in the inactive state, the response indicating that the UE is ready for reception of the small data in the inactive state.

The UL response may serve as a feedback to the network node that the UE has initiated SDT. Initiating SDT may include for example starting a timer (e.g. SDT timer is started and running). Thereby, the UE is, for example, anticipating DL-SDT data (e.g. including monitoring the control channels associated with the downlink shared data channel).

The UE 1710 may comprise the transceiver 1720 and a (processing) circuitry 1730, and the network node 1760 may comprise the transceiver 1770 and a (processing) circuitry 1780. The transceiver 1710 in turn may comprise and/or function as a receiver and/or a transmitter. In this disclosure, in other words, the term "transceiver" is used for hardware and software components that allow the communication device 1710, or, respectively base station 1760 to transmit and/or receive radio signals over a wireless channel 1750. Accordingly, a transceiver corresponds to a receiver, a transmitter, or a combination of a receiver and a transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only transmits signals. Moreover, the term "circuitry" includes processing circuitry formed by one or more processors or processing units, etc. The circuitries 1730 and 1780 (or processing circuitries) may be one or more pieces of hardware such as one or more processors or any LSIs. Between the transceiver and the processing circuitry there is an input/output point (or node) over which the processing circuitry, when in operation, can control the transceiver, i.e. control the receiver and/or the transmitter and exchange reception/transmission data.

The transceiver, as the transmitter and receiver, may include the RF (radio frequency) front including one or more antennas, amplifiers, RF modulators/demodulators and the like. The processing circuitry may implement control tasks such as controlling the transceiver to transmit user data and control data provided by the processing circuitry and/or receive user data and control data that is further processed by the processing circuitry. The processing circuitry may also be responsible for performing other processes such as determining, deciding, calculating, measuring, etc. The transmitter may be responsible for performing the process of transmitting and other processes related thereto. The receiver may be responsible for performing the process of receiving and other processes related thereto, such as monitoring a channel.

It is further noted that any of the steps/operations/methods described below may be performed or controlled by the circuitry 1730 (on the UE side) and/or the circuitry 1780 (on the network node side).

In the further description, the details and embodiments apply to each of the user equipment, the network node and the methods unless explicit statement or context indicates otherwise.

Moreover, it is noted that any of the steps described below may be included as code instructions in a program, which may be executed by one or more processors (e.g. the circuitry 1730 and/or the circuitry 1780).

### Paging for MT-SDT

At some point of time while the UE 1710 is in the inactive state, it is assumed that small data becomes available for transmission from a network node 1760 to the UE 1710.

When small data arrives for a downlink transmission, the UE 1710, which is in the inactive state, receives S1910 a paging message from a network node 1760. Paging may be performed, for example, via CN paging or RAN paging: e.g. an UE monitors a paging channel for CN paging using 5G-S-TMSI or RAN paging using full I-RNTI. More details can be found in section *RRC States.*

In the 5G NR standard, said inactive state, for example, corresponds to the RRC_INACTIVE state. The paging message may be a paging message as defined by a current and/or future standard. For example, said paging message may be interpreted by a non-SDT capable UE as indication to resume to a connected state, e.g. the RRC_CONNECTED state.

In response to the reception of such a paging message a SDT-capable UE 1710, according to the present disclosure, remains S1920 in the inactive state for the reception of small data. In particular, a SDT-capable UE 1710 may determine to remain in the inactive state according to definitions of a standard, a (default) configuration of the UE or the like. For example, a standard may prescribe that the UE always remains in the inactive state upon receiving the paging message. Correspondingly, the UE determines to remain in the inactive state. In another example, a standard may enable configurability of the UE behavior upon reception of a paging message. Such configurability may include, e.g. a default configuration such as remaining in the inactive state. A UE may determine its configuration based on the paging message (e.g. whether it arrived via PDCCH or via PDSCH) or may receive the configuration from the network node or the like.

In other words, upon receiving such paging message, the UE 1710 in the inactive state detects the possibility of arrival of small data. The SDT-capable UE 1710 interprets such (standard) paging message as indication for a possibility to receive a small data transmission; the SDT-capable UE 1710 according to the present disclosure may not interpret the paging as indication to resume to a connected state.

The term "arrive" here refers to an arrival from a higher layer. Thus, in other words, said small data becomes available for transmission. Furthermore, the term "detected" includes the detection of the actual arrival of the data as well as the detection/determination that small data are expected to arrive for transmission.

The UE 1710, while remaining in the inactive state, responds to the paging message by transmitting S1930 a response to the network node 1760. The response is transmitted within a transmission opportunity associated with pre-configured resources. Pre-configured resources include, for example, resources used for a transmission of the RACH procedure as well as resources assigned to the UE via a Configured Grant (CG) procedure. The transmission opportunities arise from the definitions and implementations of said procedure. The RACH procedure as well as the CG procedure are explained in detail above in section *Data transmission by UE in RRC Inactive state.* However the present disclosure is not limited to a RACH procedure or a CG procedure, any present or future procedure for transmitting an UL response in an inactive state may be used.

Thus, the response to the paging message may include at least one of a random access small data transmission (RA-SDT), a configured grant small data transmission (CG-SDT) or a mobile terminated small data transmission (MT-SDT). A decision on whether to use RA-SDT or CG-SDT for UL response may be performed according to UL-SDT, which is explained in section *Data transmission by UE in RRC Inactive state.* MT-SDT provides an example for an envisaged procedure of a future 3GPP 5G NR release. MT-SDT may not only cover UL transmissions (as in current RA-SDT and CG-SDT) but may include DL transmission for UE in an inactive state. MT-SDT may include elements of RA-SDT and/or CG-SDT or a hybrid combination of both RA-SDT and CG-SDT. MT-SDT may be a new type of UL and/or DL transmission designed specifically for UE operating in the inactive state.

Upon responding to the paging message, the UE 1710 may receive small data from the network node 1760 while remaining in the inactive state. For example, the small data may be a message carrying payload. Particular examples for small data carrying payload are given above in section *Small data transmissions.* For example, the small data may include an indication that the UE 1710 is to transit in a connected state. In other words, the network node may utilize the MT-SDT procedure to transmit a resume message (e.g. RRC_RESUME) to the SDT-capable UE.

In other words, in the case when the incoming DL data is normal (non-SDT) data, the network node (eNB/gNB) may respond with a RRCResume upon receiving UL response from UE to instruct the SDT-capable UE 1710 to transit to RRC_CONNECTED mode.

As already indicated above, the remaining in the inactive state is determined according to a UE configuration. Such configuration may be pre-stored configuration, which may be received from the network node or may be a default configuration of the UE or the like.

### UE configuration

The (default) UE configuration of the UE 1710 includes a setting for a default behavior when receiving a paging message. This "UE configuration" describes a current configuration of the UE. Said UE configuration may be, for example, a default initial configuration, which is set according to a standard and/or by a network or by the UE itself according to UE capabilities. Said UE configuration may be, for example, configured (adopted) or reconfigured based on a received (e.g. via RRC) configuration. Exemplary implementations of setting and/or receiving and/or transmitting (information of) said UE configuration are explained in the following. Said exemplary implementations may be performed individually as well as in combination.

### 1. According to UE capabilities

The above-mentioned UE configuration enables the initialization of SDT upon paging by default. For example, such UE configuration is set for the UE 1710 according to the capabilities of the UE 1710. In this case, the UE 1710 determines its capabilities and sets its configuration according to the capabilities. The UE 1710 indicates its capabilities to the network node 1760, while being in the connected state. For example, such UE capabilities may include properties and/ or requirements of the UE. For example, the UE SDT capabilities may be defined based on SDT types. Such SDT types may include, for example, RA-SDT, CG-SDT or new SDT type for DL (e.g. MT-SDT). For example, the UE in the inactive state may initiate SDT upon paging by default according to a UE category which supports SDT and/or is configured with SDT. Such a UE category may define a combined uplink and downlink capability of a UE as specified by a current or future standard.

For example, the UE reports its capabilities via UECapabilitylnformation message. UECapabilitylnformation is a RRC message that the UE 1710 sends to the network node 1760 (e.g. during an initial registration process or on request from the network node). The UECapabilitylnformation message includes detailed information about the capabilities of the UE.

For example, the network node 1760 may request capability information including sending a UECapabilityEnquiry message to the UE 1710. UECapabilityEnquiry is a RRC message transmitted by a network node 1760 to request detailed information about the capabilities of a UE. The UE 1710 receives the enquiry and reports its capabilities via UECapabilitylnformation message.

In other words, a SDT-capable UE 1710 is configured to remain in the inactive state upon receiving a paging message and respond to the network node as explained above. The SDT-capable UE informs the network about its configuration while being in the connected state. The network node may request the information about the UE capabilities receives the information from the UE in the connected state.

### 2. According to semi-static information received by UE

The network node 1760 may transmit a configuration for MT-SDT to a UE 1710 in a connected state. Such transmitted configuration may, for example, include settings according to a standard, to a configuration of the network node, to a configuration of the network, or the like, or a combination thereof. The UE 1710 may receive, for example, a configuration before transiting from a connected state into an inactive state. The UE 1710 configures (adopts) the UE configuration accordingly. The configuration may be received from a network node 1760. In general, the configuration may be received from a network node anytime, for example during the period in which the UE 1710 is in a connected state.

However, the present disclosure is not limited hereto and it is conceivable that the UE may receive such configuration even in inactive mode, e.g. some time within small data.

Especially in the context of the NR, the network node may transmit the configuration semi-statically. The term "semi-statically" in NR refers to higher layer signaling, and, in particular to the RRC. Such signaling is not dynamic as the shared channel control signaling used to indicate resource allocation (e.g. over PDCCH). However, it still may be received after the connection setup or generally during the connection (e.g. in the connected mode).

For example, when the UE 1710 is indicated to transit to RRC_INACTIVE, said UE 1710 is provided with semi-static information related to a (default) UE configuration by the network node 1760. When the UE 1710 in RRC_CONNECTED receives RRCRelease with a suspend message to enter RRC_INACTIVE, semi-static information (e.g. an information element SDT-Config) is included in the same message.

A default configuration regarding UE default behavior/state to trigger MT-SDT upon paging (e.g. "sdt-Paging" field) may be included together in SDT-Config (an example is shown below). The SDT-Config may be included in the SuspendConfig field with is carried in RRC Release (with suspend). Such a SuspendConfig is also shown below.

```
 SuspendConfig ::= SEQUENCE {
     fullI-RNTI I-RNTI-Value,
     shortI-RNTI ShortI-RNTI-Value,
     ran-PagingCycle PagingCycle,
     ran-NotificationAreaInfo RAN-NotificationAreaInfoOPTIONAL, -- Need M
     t380 PeriodicRNAU-TimerValue OPTIONAL, -- Need R
    nextHopChainingCount NextHopChainingCount,
     ..., [[
     sdt-Config SetupRelease { SDT-Config} OPTIONAL -- Need
     M
     ]] }
     SDT-Config ::= SEQUENCE {
     sdt-DRB-List SEQUENCE (SIZE (0..maxDRB)) OF DRB-Identity
     OPTIONAL, -- Need M
     sdt-SRB2-Indication ENUMERATED {allowed} OPTIONAL, -- Need R
     sdt-MAC-PHY-CG-Config SetupRelease {SDT-CG-Config} OPTIONAL,--
     Need M
     sdt-DRB-ContinueROHC ENUMERATED { cell, rna } OPTIONAL -- Need R
     sdt-Paging ENUMERATED {true} OPTIONAL, -- Need R
 }
```

The exemplary SDT-Config includes a field called sdt-Paging. In the case when sdt-Paging is set to "true", the UE receiving the configuration is thereby instructed to adopt the configuration to initiate SDT upon paging. The exemplary SuspendConfig includes the field sdt-Config, which may be set to include the value sdt-Config.

The ASN.1 signaling field examples shown are not limited to ENUMERATED type but may also include other types such as BOOLEAN or the like.

After transiting into RRC_INACTIVE, the UE 1710 is configured to initiates SDT upon paging and transmits the response as described above.

### 3. According to a preference of UE

Alternatively or in addition the UE 1710 may inform the network node 1760 about a preferred UE configuration. Thus, the UE 1710 transmits information about a preferred UE configuration to the network node 1760 while being in a connected state. For example, the UE 1710 may include an indication in *UEAssistanceInformation* message. An example for such message is given below.

```
 SDTPreference ::= SEQUENCE {
     sdt-Paging ENUMERATED {inactive, connected}
 }
```

Such exemplary SDTPreference includes a preferred state (e.g. connected or inactive) to receive small data.

Such message indicated the preference of the UE 1710 whether to initiate SDT or non-SDT upon paging. Such preference may be indicated by a standard, by UE capabilities, by a type of the UE or the like.

In response to receiving said message, the network node 1760 may inform the UE 1710 about a decision regarding the default state (initiate SDT or non-SDT upon paging) before the UE 1710 transits to the inactive state. Such notifying may be performed as explained in detail above for the configuration *according to semi-static information received by UE.* The decision of the network node may include a determination according to a standard, to a configuration of the network node, to a configuration of the network, or the like, or a combination thereof.

The UE 1710 may send information regarding its SDT preference upon paging either network-initiated (e.g. via RRCReconfiguration procedure) or UE-initiated (e.g. if UE configured to provide SDT preference in response to paging).

### 4. According to a configuration of radio bearers

The UE configuration may be configured or reconfigured based on a configuration of radio bearers. For example, in the case when all data radio bearers (DRBs) of a plurality of DRBs and/or at least one signaling radio bearer (SRB) out of a plurality of SRBs are configured for SDT, the UE configuration may include that the default behaviour for UE the is to initiate SDT upon paging.

The plurality of SRBs may include SRB0, SRB1 and SRB2. For example, one or more of SRB1 and SRB2 may be configured for SDT purpose. Then the UE 1710 may be configured or reconfigured to initiate SDT upon paging.

The configuration of the UE in the inactive state may include the configuration of a plurality of DRBs, including one or more DRBs. If all DRBs out of said plurality are configured for SDT, the UE 1710 may be configured or reconfigured to initiate SDT upon paging by default.

### 5. According to a SI change indication

The UE 1710 may receive (together with all UEs within a same cell) a system information (SI) change indication. The UE in the inactive state may receive SI change indication via paging, e.g. using a Short Message transmitted with P-RNTI over DCI.

The UE 1710 performs SI acquisition procedure and updates its SDT configuration based on a received in a System Information Block (SIB). Such SI acquisition procedure may be initiated by a network node or by a UE. For example SI may be broadcasted periodically by the network node to all UEs within the cell. For example, a UE may request an SI transmission.

For example, the SDT default configuration may be included in SIB1 as shown below.

```
 SDT-ConfigCommonSIB ::= SEQUENCE {
     sdt-RSRP-Threshold RSRP-Range,
     sdt-LogicalChannelSR-DelayTimer ENUMERATED { sf20, sf40, sf64, sf128,
     sf512, sf1024, sf2560, spare1} OPTIONAL, -- Need R
     sdt-DataVolumeThreshold ENUMERATED {byte32, byte100, byte200,
     byte400, byte600, byte800, byte1000, byte2000, byte4000, byte8000,
     byte9000, byte10000, byte12000, byte24000, byte48000, byte96000},
     t319a ENUMERATED { ms100, ms200, ms300,
     ms400, ms600, ms1000, ms2000, ms3000, ms4000, spare7, spare6, spare5,
     spare4, spare3, spare2, spare1},
     sdt-Paging ENUMERATED {true} OPTIONAL, -- Need R
 ... }
```

The exemplary SDT-ConfigCommonSIB includes a field called sdt-Paging. In the case when sdt-Paging is set to "true", the UE receiving the configuration is thereby instructed to adopt the configuration to initiate SDT upon paging.

Such a configuration is a common configuration for all UEs in a cell.

According to the received SI change indication, the UE 1710 configures or reconfigures the UE configuration.

Thus, the UE 1710, by default, initiates SDT upon paging and sends a UL response to the network node 1760 as described above.

### Indications for MT-SDT within a paging message or a short message

In a second exemplary embodiment for implementing paging for downlink small data transmissions, an indication is transmitted to the UE. Thus, the UE receives an indication to receive small data from a network node.

The exemplary UE shown in Fig. 16 (left-hand side) and described in detail above, may be configured to perform MT-SDT according to the second exemplary embodiment.

The UE 1710 in Fig. 16 comprises a transceiver 1720 and circuitry 1730. The circuitry 1730, in operation, receives an indication to receive small data from a network node. In response to receiving the indication, the UE 1710 remains in the inactive state for reception of the small data. While remaining in the inactive state, the UE transmits a response on the indication to a network node.

In general, the circuitry 1730 may control the transceiver 1720 to receive and/or transmit data. This is illustrated by an arrow 1725 which represents schematically an interface between the circuitry 1730 and the transceiver 1720, over which the control is performed. For example, the circuitry 1730 may instruct 1725 the transceiver 1720 to transmit said response to the indication for SDT. Similarly, the circuitry 1730 may control the transceiver 1720 to receive the paging message, and receive said indication from the transceiver over said interface 1725.

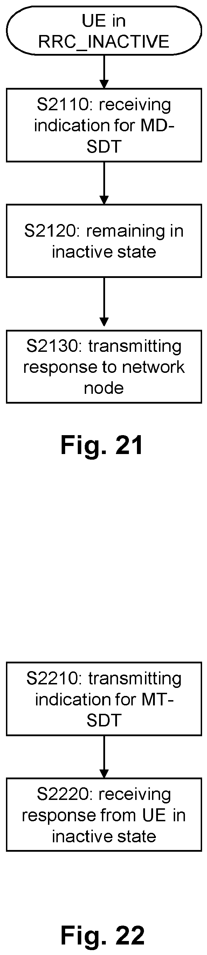

In correspondence with the above described UE, according to the second exemplary embodiment, a communication method to be performed by a UE in an inactive state is provided. As shown in **Fig. 21**, the method comprises the steps of:
- receiving (S2110) an indication to receive small data from a network node;
- in response to the paging message, remaining (S2120) in the inactive state for reception of the small data; and
- while remaining in the inactive state, transmitting (S2130) a response to the paging message to a network node.

Such method to perform MT-SDT according to the second exemplary embodiment may be implemented individually in an UE or may be implemented in addition to the method according to the first exemplary embodiment.

As also exemplarily shown in Fig. 16 (right-hand side) a network node 1760 according to the second exemplary embodiment is provided. The network node 1760 comprises a transceiver 1770 and a circuitry 1780. The circuitry 1780, in operation, transmits an indication to receive small data to a UE in an inactive state. The network node receives a response from the UE in the inactive state, the response indicating that the UE is ready for reception of the small data in the inactive state.

In general, the circuitry 1780 may control the transceiver 1770 to receive and/or transmit data. This is illustrated by an arrow 1775 which represents schematically an interface between the circuitry 1780 and the transceiver 1770, over which the control is performed. For example, the circuitry 1780 may instruct 1775 the transceiver 1770 to transmit said indication. Similarly, the circuitry 1780 may control the transceiver 1770 to receive the response to the indication, and receive the response from the transceiver over said interface 1775.

Furthermore, in correspondence with the above described base station, a communication method to be performed by a network node according to the second exemplary embodiment is provided. As shown in **Fig. 22**, the method comprising the steps of:
- transmitting (S2210) a. indication to receive small data to a UE in an inactive state; and
- receiving (S2220) a response from the UE in the inactive state, the response indicating that the UE is ready for reception of the small data in the inactive state.

As already described above, the UE 1710, while remaining in the inactive state, responds to the indication by transmitting S1930 a response to the network node 1760. The response is transmitted within a transmission opportunity associated with pre-configured resources. Pre-configured resources include, for example, resources used for a transmission of the RACH procedure as well as resources assigned to the UE via a Configured Grant (CG) procedure. The transmission opportunities arise from the definitions and implementations of said procedure. The RACH procedure as well as the CG procedure are explained in detail above in section *Data transmission by UE in RRC Inactive state.* However the present disclosure is not limited to a RACH procedure or a CG procedure, any present or future procedure for transmitting an UL response in an inactive state may be used.

The steps performed by the UE according to the second exemplary embodiment, including responding to the network node and receiving small data may be performed analogously to the first exemplary embodiment. In addition, the steps performed by the network node according to the second exemplary embodiment, including receiving a response from the UE and transmitting small data may also be performed analogously to the first exemplary embodiment.

Thus, the response to the paging message may include at least one of a random access small data transmission (RA-SDT), a configured grant small data transmission (CG-SDT) or a mobile terminated small data transmission (MT-SDT).

Upon responding to the paging message, the UE 1710 may receive small data from the network node 1760 while remaining in the inactive state. For example, the small data may be a message carrying payload. Particular examples for small data carrying payload are given above in section *Small data transmissions.*

The received indication is interpreted by the UE to identify the incoming DL traffic as small data transmission and UE does not need to transit to a connected state

The indication for receiving small data may be included, for example, in a paging message or in a short message. However, the present disclosure is not limited to these examples; the indication to receive small data may be included in any present or future message that is received by an UE in an inactive state.

Said indication for SDT may be carried, for example, in the paging message (in PCCH logical channel), e.g. in PagingRecord. An example is provided below.

```
 PagingRecord ::= SEQUENCE {
    ue-Identity PagingUE-Identity,
     accessType ENUMERATED {non3GPP} OPTIONAL, -- Need N
     SDT ENUMERATED {true} OPTIONAL, -- Need N
 ... }
```

The exemplary PagingRecord includes a signaling field "SDT", which is set to "true" in the case when a small data transmission is indicated. The signaling field examples shown are not limited to ENUMERATED type but may also include other types such as BOOLEAN or the like.

As mentioned above, a short message may also be used to indicate MT-SDT. A short message is transmitted on PDCCH (e.g. DCI format 1_0) using P-RNTI with or without an associated paging message. According to 3GPP TS 38.331, the Short Message field has length of 8-bit in which bits 4-8 are currently not used. For example, bit 4 may be used to indicate MT-SDT, as shown below.

| **Bit** | **Short Message** |
|---|---|
| 1 | ***systemlnfoModification*** |
| | If set to 1: indication of a BCCH modification other than SIB6, SIB7 and SIB8. |
| 2 | ***etwsAndCmaslndication*** |
| | If set to 1: indication of an ETWS primary notification and/or an ETWS secondary notification and/or a CMAS notification. |
| 3 | ***stopPagingMonitoring*** |
| | This bit can be used for only operation with shared spectrum channel access and if *nrofPDCCH-MonitoringOccasionPerSSB-InPO* is present. If set to 1: indication that the UE may stop monitoring PDCCH occasion(s) for paging in this Paging Occasion as specified in TS 38.304 [20], clause 7.1. |
| 4 | ***sdtPaging*** |
| | This bit can be used as indication to UE to intiate SDT. If set to 1: indication that the UE sends request to upper layer for initiating SDT. |
| 5-8 | Not used in this release of the specification, and shall be ignored by UE if received. |

Bit 4 in this example indicated sdtPaging, in particular, said bit being set to 1 provides an indication for the UE to initiate SDT.

However, the present disclosure is not limited to such exemplary short message. For example, a different RNTI and/or a different DCI format may be used for an indication of MT-SDT. Such a different RNTI may be an existing RNTI or new RNTI, e.g. sdt-RNTI.

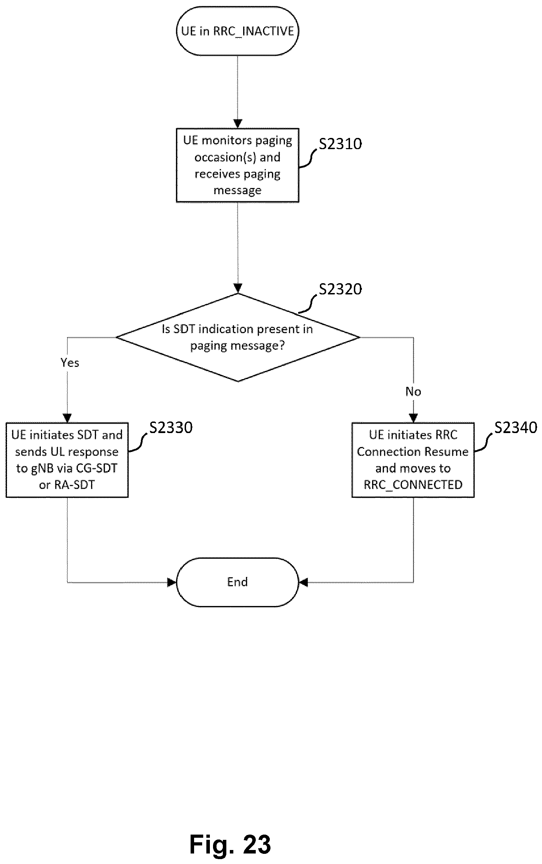

**Fig. 23** provides steps of an exemplary implementation according to the second exemplary embodiment. The UE in the RRC_INACTIVE state monitors S2310 paging occasion(s) and receives a paging message. The UE determines S2320 whether the paging message includes a SDT indication. If the paging message includes said indication ("Yes" in S2320), the UE initiates S2330 SDT and send a response to the network node. If the paging message does not include said indication ("No" in S2320), the UE initiates S2340 a resume procedure and transits to the connected state.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, a user equipment (UE) is provided. The UE comprises a transceiver and circuitry. The circuitry, in operation, receives a paging message, while being in an inactive state. In response to the paging message, the circuitry, in operation determines to remain in the inactive state for reception of small data. While remaining in the inactive state, the circuitry, in operation, transmits a response to the paging message to a network node within a transmission opportunity associated with pre-configured resources.

According to a second aspect provided in addition to the first aspect, the circuitry, in operation further receives said small data within a small data transmission (SDT) from the network node while remaining in the inactive state.

According to a third aspect, provided in addition to one of the first to second aspects, the small data is a message carrying payload or an indication that the UE is to transit in a connected state.

According to a fourth aspect, provided in addition to one of the first to third aspects, the remaining in the inactive state is determined according to a UE configuration.

According to a fifth aspect, provided in addition to the fourth aspect, the UE configuration is set for the UE according to UE capabilities of the UE.

According to a sixth aspect, provided in addition to one of the fourth to fifth aspects, the circuitry, in operation, before transiting from a connected state into an inactive state, receives a configuration, and configures the UE configuration accordingly.

According to a seventh aspect, provided in addition to one of the fourth to sixth aspects, the circuitry, in operation, transmits information about a preferred UE configuration to the network node while being in a connected state.

According to an eighth aspect, provided in addition to one of the fourth to seventh aspects, the circuitry, in operation, configures or reconfigures the UE configuration based on a configuration of radio bearers.

According to a ninth aspect, provided in addition to the eighth aspect, the configuration of radio bearers includes whether all data radio bearers (DRBs) of a plurality of DRBs and/or at least one signaling radio bearer (SRB) out of a plurality of SRBs are configured for SDT.

According to a tenth aspect, provided in addition to one of the fourth to ninth aspects, the circuitry, in operation, receives a system information (SI), change indication, and configures or reconfigures the UE configuration according to the SI change indication.

According to an eleventh aspect, provided in addition to one of the first to tenth aspects, the response to the paging message to a network node includes using at least one of:
- random access small data transmission (RA-SDT),
- configured grant small data transmission (CG-SDT), or
- mobile terminated small data transmission (MT-SDT).

According to a twelfth aspect a network node is provided. The network node comprises a transceiver and circuitry. The circuitry, in operation, transmits a paging message to a UE in an inactive state. The circuitry, in operation, receives a response from the UE in the inactive state, the response indicating that the UE is ready for reception of small data in the inactive state.

According to a thirteenth aspect provided in addition to the twelfth aspect, the circuitry, in operation further transmits said small data within a small data transmission (SDT) to the UE in the inactive state.

According to a fourteenth aspect, provided in addition to one of the twelfth to thirteenth aspects, the small data is a message carrying payload or an indication that the UE is to transit in a connected state.

According to a fifteenth aspect, provided in addition to one of the twelfth to fourteenth aspect, the circuitry receives information about a UE configuration.

According to a sixteenth aspect, provided in addition to one of the one of the twelfth to fifteenth, the circuitry, in operation, transmits a configuration to the UE, before the UE transits from a connected state into an inactive state.

According to a seventeenth aspect, provided in addition to one of the twelfth to sixteenth aspects, the circuitry, in operation, receives information about a preferred UE configuration from the UE in a connected state.

According to an eighteenth aspect, provided in addition to one of the twelfth to seventeenth aspects, the circuitry, in operation, transmits a system information (SI), change indication, including indications to configure or reconfigure a UE configuration.

According to a nineteenth aspect, provided in addition to one of the twelfth to eighteenth aspects, the received response to the paging message includes using at least one of:
- random access small data transmission (RA-SDT),
- configured grant small data transmission (CG-SDT), or
- mobile terminated small data transmission (MT-SDT).

According to a twentieth aspect a method for a user equipment (UE) in an inactive state is provided. The method comprising the steps of:
- receiving a paging message;
- in response to the paging message, determining to remain in the inactive state for reception of the small data; and
- while remaining in the inactive state, transmitting a response to the paging message to a network node within a transmission opportunity associated with pre-configured resources.

According to a twenty-first aspect a method for transmitting small data by a network node is provided. The method comprising the steps of:
- transmitting a paging message to a UE in an inactive state;
- receiving a response from the UE in the inactive state, the response indicating that the UE is ready for reception of the small data in the inactive state.

According to a twenty-second aspect, an integrated circuit is provided, which, in operation, controls a process of a user equipment, the process comprising the following steps performed by the user equipment:
- receiving a paging message;
- in response to the paging message, determining to remain in the inactive state for reception of the small data; and
- while remaining in the inactive state, transmitting a response to the paging message to a network node within a transmission opportunity associated with pre-configured resources.

According to a twenty-third aspect, an integrated circuit is provided, which, in operation, controls a process of a network node, the process comprising the following steps performed by the network node:
- transmitting a paging message to a UE in an inactive state;
- receiving a response from the UE in the inactive state, the response indicating that the UE is ready for reception of the small data in the inactive state.

According to a twenty-fourth aspect, a program stored on a storage medium and including code instructions, which, when executed on one or more processors of a user equipment, cause the one or more processors to execute the following steps:
- receiving a paging message;
- in response to the paging message, determining to remain in the inactive state for reception of the small data; and
- while remaining in the inactive state, transmitting a response to the paging message to a network node within a transmission opportunity associated with pre-configured resources.

According to a twenty-fifth aspect, a program stored on a storage medium and including code instructions, which, when executed on one or more processors of a network node, cause the one or more processors to execute the following steps:
- transmitting a paging message to a UE in an inactive state;
- receiving a response from the UE in the inactive state, the response indicating that the UE is ready for reception of the small data in the inactive state.

According to a twenty-sixth aspect, a user equipment (UE) is provided. The UE comprises a transceiver and circuitry. The circuitry, in operation, receives an indication to receive small data from a network node. In response to receiving the indication, the circuitry determines to remain in the inactive state for reception of the small data. While remaining in the inactive state, the circuitry transmits a response on the indication to a network node.

According to a twenty-seventh aspect, provided in addition to the twenty-sixth aspect, the indication is included in a paging message or in a short message.

According to a twenty-eighth aspect provided in addition to one of the twenty-sixth to twenty-seventh aspects, the indication is included in a Radio Network Temporary Identifier, RNTI, and/or a Downlink Control Information, DCI, and/or a physical layer on a Physical Downlink Control Channel, PDCCH.

According to a twenty-ninth aspect provided in addition to one of the twenty-sixth to twenty-eighth aspects, the circuitry, in operation further receives said small data within a small data transmission (SDT) from the network node while remaining in the inactive state.

According to a thirtieth aspect, provided in addition to one of the twenty-sixth to twenty-ninth aspects, the small data is a message carrying payload or an indication that the UE is to transit in a connected state.

According to a thirty-first aspect, provided in addition to one of the twenty-sixth to thirtieth aspects, the response to the paging message to a network node includes using at least one of:
- random access small data transmission (RA-SDT),
- configured grant small data transmission (CG-SDT), or
- mobile terminated small data transmission (MT-SDT).

According to a thirty-second aspect a network node is provided. The network node comprises a transceiver and circuitry. The circuitry, in operation, transmits an indication to receive small data to a UE in an inactive state. The circuitry, in operation, receives a response from the UE in the inactive state, the response indicating that the UE is ready for reception of the small data in the inactive state.

According to a thirty-third aspect, provided in addition to the thirty-second aspect, the indication is included in a paging message or in a short message.

According to a thirty-fourth aspect provided in addition to one of the thirty-second to thirty-third aspects, the circuitry, in operation further transmits said small data within a small data transmission (SDT) from the network node while remaining in the inactive state.

According to a thirty-fifth aspect, provided in addition to one of the thirty-second to thirty-fourth aspects, the small data is a message carrying payload or an indication that the UE is to transit in a connected state.

According to a thirty-sixth aspect, provided in addition to one of the thirty-second to thirty-fifth aspects, the response to the paging message to a network node includes using at least one of:
- random access small data transmission (RA-SDT),
- configured grant small data transmission (CG-SDT), or
- mobile terminated small data transmission (MT-SDT).

According to a thirty-seventh aspect a method for a user equipment (UE) in an inactive state is provided. The method comprising the steps of:
- receiving an indication to receive small data from a network node;
- in response to receiving the indication, determining to remain in the inactive state for reception of the small data;
- while remaining in the inactive state, transmitting a response on the indication to a network node.

According to a thirty-eight aspect a method for transmitting small data by a network node is provided. The method comprising the steps of:
- transmitting an indication to receive small data to a UE in an inactive state;
- receiving a response from the UE in the inactive state, the response indicating that the UE is ready for reception of the small data in the inactive state.

According to a thirty-ninth aspect, an integrated circuit is provided, which, in operation, controls a process of a user equipment, the process comprising the following steps performed by the user equipment:
- receiving an indication to receive small data from a network node;
- in response to receiving the indication, determining to remain in the inactive state for reception of the small data;
- while remaining in the inactive state, transmitting a response on the indication to a network node.

According to a fortieth aspect, an integrated circuit is provided, which, in operation, controls a process of a network node, the process comprising the following steps performed by the network node:
- transmitting an indication to receive small data to a UE in an inactive state;
- receiving a response from the UE in the inactive state, the response indicating that the UE is ready for reception of the small data in the inactive state.

According to a forty-first aspect, a program stored on a storage medium and including code instructions, which, when executed on one or more processors of a user equipment, cause the one or more processors to execute the following steps:
- receiving an indication to receive small data from a network node;
- in response to receiving the indication, determining to remain in the inactive state for reception of the small data;
- while remaining in the inactive state, transmitting a response on the indication to a network node.

According to a forty-second aspect, a program stored on a storage medium and including code instructions, which, when executed on one or more processors of a network node, cause the one or more processors to execute the following steps:
- transmitting an indication to receive small data to a UE in an inactive state;
- receiving a response from the UE in the inactive state, the response indicating that the UE is ready for reception of the small data in the inactive state.

Summarizing, the disclosure relates to a user equipment (UE), a network node, and respective methods for a UE and a network node. The UE comprises a transceiver and circuitry. The circuitry in operation receives a paging message, while being in an inactive state. In response to the paging message, the circuitry determines to remain in the inactive state for reception of small data. While remaining in the inactive state, the circuitry transmits a response to the paging message to a network node within a transmission opportunity associated with pre-configured resources.

## Claims

1. A user equipment, UE, comprising:
a transceiver; and
circuitry which, in operation:
receives a paging message, while being in an inactive state;
in response to the paging message, determines to remain in the inactive state for reception of small data; and
while remaining in the inactive state, transmits a response to the paging message to a network node within a transmission opportunity associated with pre-configured resources.

2. The UE according to claim 1, wherein the circuitry, in operation further receives said small data within a small data transmission, SDT, from the network node while remaining in the inactive state.

3. The UE according to any of the claims 1 to 2, wherein the small data is a message carrying payload or an indication that the UE is to transit in a connected state.

4. The UE according to any of the claims 1 to 3, wherein the remaining in the inactive state is determined according to a UE configuration.

5. The UE according to claim 4, wherein the UE configuration is set for the UE according to UE capabilities of the UE.

6. The UE according to any of claims 4 to 5, wherein
the circuitry, in operation:
before transiting from a connected state into an inactive state, receives a configuration; and configures the UE configuration accordingly.

7. The UE according to any of claims 4 to 6, wherein
the circuitry, in operation:
transmits information about a preferred UE configuration to the network node while being in a connected state.

8. The UE according to any of claims 4 to 7, wherein
the circuitry, in operation:
configures or reconfigures the UE configuration based on a configuration of radio bearers.

9. The UE according to claim 8, wherein the configuration of radio bearers includes whether all data radio bearers, DRBs, of a plurality of DRBs and/or at least one signaling radio bearer, SRB, out of a plurality of SRBs are configured for SDT.

10. The UE according to any of claims 4 to 9, wherein
the circuitry, in operation:
receives a system information, SI, change indication; and
configures or reconfigures the UE configuration according to the SI change indication.

11. The UE according to any of claims 1 to 10, wherein the response to the paging message to a network node includes using at least one of:
- random access small data transmission, RA-SDT,
- configured grant small data transmission, CG-SDT, or
- mobile terminated small data transmission, MT-SDT.

12. A network node comprising:
a transceiver; and
circuitry which, in operation:
transmits a paging message to a UE in an inactive state;
receives a response from the UE in the inactive state, the response indicating that the UE is ready for reception of small data in the inactive state.

13. A method for receiving small data by a user equipment, UE, in an inactive state, the method comprising:
receiving a paging message;
in response to the paging message, determining to remain in the inactive state for reception of the small data; and
while remaining in the inactive state, transmitting a response to the paging message to a network node within a transmission opportunity associated with pre-configured resources.

14. A method for transmitting small data, by a network node, the method comprising:
transmitting a paging message to a UE in an inactive state;
receiving a response from the UE in the inactive state, the response indicating that the UE is ready for reception of the small data in the inactive state.

15. A user equipment, UE, comprising:
a transceiver; and
circuitry which, in operation:
receives an indication to receive small data from a network node;
in response to receiving the indication, determines to remain in the inactive state for reception of the small data;
while remaining in the inactive state, transmits a response on the indication to a network node.
